# EUROPÄISCHE PATENTSCHRIFT

(11) **EP 2 853 477 B1**
(45) Veröffentlichungstag und Bekanntmachung des Hinweises auf die Patenterteilung: **14.03.2018**
(21) Anmeldenummer: 13004712.9
(22) Anmeldetag: 27.09.2013
(51) Int. Cl.: B63B 9/04

(54) **Verfahren zum Vergrößern eines Schiffes und vergrößertes Schiff**
Method for extending a ship, and extended ship
Procédé d'agrandissement d'un bateau et bateau agrandi

(43) Veröffentlichungstag der Anmeldung: 01.04.2015
(73) Patentinhaber: NSB niederelbe Schiffahrtgesellschaft mbH & Co. KG, 21614 Buxtehude (DE)
(72) Erfinder: Müller, Lutz, 25348 Glückstadt (DE); Ponath, Helmut, 21614 Buxtehude (DE)
(74) Vertreter: Hauck Patentanwaltspartnerschaft mbB

(56) Entgegenhaltungen:
- EP-A2- 1 914 160
- GB-A- 1 250 932
- JP-A- S5 519 641
- JP-A- S58 209 678
- JP-A- S61 135 884
- US-A- 3 397 663

## Beschreibung

Die Erfindung bezieht sich auf ein Verfahren zum Vergrößern eines Schiffes und auf ein vergrößertes Schiff.

Panamax-Containerschiffe passen aufgrund ihrer maximalen Breite von 32,3 m, maximalen Länge von 294,3 m, und ihres Tiefganges von maximal 12,04 m durch die Schleusen des Panama-Kanals hindurch und können diesen somit passieren. Die Wirtschaftlichkeit dieser Schiffe ist jedoch auf Routen, die den Panama-Kanal nicht einbeziehen, wesentlich geringer, als bei Schiffen mit größerer Schiffsbreite. Dies beruht insbesondere darauf, dass durch den enormen Anstieg der Brennstoffpreise der Betrieb breitere und langsamere Schiffe, bei denen der notwendige Stabilitätsballast zugunsten der Ladung deutlich verringert ist, kosteneffizienter ist. Zudem werden nach dem Umbau des Panama-Kanals, mit dessen Fertigstellung nach 2016 gerechnet wird, größere Schiffe der Neopanamax-Klasse den Kanal passieren können, die maximale Schiffsabmessungen von 49 m Breite, 366 m Länge und maximal 15,2 m Tiefgang haben.

Bereits bekannt ist, die Ladungskapazität von Containerschiffen durch Einbau einer zusätzlichen Rumpfsektion zu vergrößern. Dem sind dadurch Grenzen gesetzt, dass der Schiffsrumpf auf Belastungen ausgelegt ist, die auf den Schiffsrumpf mit der ursprünglichen Länge einwirken. Deshalb kann eine Verlängerung des Schiffes eine aufwendige Verstärkung des Rumpfes erfordern. Die vergleichsweise niedrige Querstabilität des Schiffes wird durch die Verlängerung nicht verbessert.

Bereits bekannt ist die Schiffsverbreiterung durch Anschweißen von Hohlräume einschließenden Verbreiterungen auf die Außenseiten der Seitenwände des Schiffes auf Höhe der Wasserlinie oder darunter. Durch diese Sponsons wird die Querstabilität des Schiffes erhöht, die Ladungskapazität jedoch nicht gesteigert.

Ferner bekannt ist die Schiffsverbreiterung durch Anschweißen einer Tragstruktur mit nach außen versetzten Schiffsseitenwänden an die Außenseiten des Schiffsrumpfes. Die Tragstruktur trägt Verbreiterungen des Hauptdecks, sodass die Stellplatzkapazität an Deck erhöht wird. Unter Deck werden keine zusätzlichen Stellplätze für Container geschaffen.

Die US 3,397,663 A und JP S55 19641 A beschreiben Verfahren der Vergrößerung der Tonnage von Schiffen, bei denen der Schiffsrumpf durch mindestens eine zusätzliche hintere Schiffssektion verlängert wird, die zwischen einem mittleren Schiffsabschnitt und einem hinteren Schiffsabschnitt eingebaut wird.

Die bekannten Schiffsverbreiterungen erfordern einen hohen Stahleinsatz mit entsprechender Zunahme des Eigengewichts, was sich in den Umbaukosten, Brennstoffverbrauch und entsprechenden Schadstoffemissionen niederschlägt.

Davon ausgehend liegt der Erfindung die Aufgabe zugrunde, ein Verfahren zur Schiffsvergrößerung zur Verfügung zu stellen, das Schiffe mit größerer Ladungskapazität und günstigerem Brennstoffverbrauch ermöglicht und mit geringeren Mengen Stahl auskommt. Zudem liegt der Erfindung die Aufgabe zugrunde, ein vergrößertes Schiff mit einer größeren Ladungskapazität, günstigerem Brennstoffverbrauch und geringeren Mengen zusätzlich verbautem Stahl zu schaffen.

Die Aufgabe wird durch ein Verfahren mit den Merkmalen von Anspruch 1 gelöst. Vorteilhafte Ausgestaltungen des Verfahrens sind in Unteransprüchen angegeben.

Gemäß dem erfindungsgemäßen Verfahren zur Schiffsvergrößerung werden
- ein Containerschiff, Conbulker, Mehrzweckschiff, Lash-Schiff oder ein anderes Schiff mit hohem Decksöffnungsgrad verbreitert, wobei
- ein den Bug umfassender vorderer Schiffsabschnitt und ein das Heck umfassender hinterer Schiffsabschnitt von einem zumindest einem Teil des Laderaums umfassenden mittleren Schiffsabschnitt abgetrennt,
- der vordere Schiffsabschnitt und der mittlere Schiffsabschnitt in Längsrichtung auseinandergerückt,
- der mittlere Schiffsabschnitt in Längsrichtung in mindestens zwei Mittelschiffsteile geteilt,
- die Mittelschiffsteile in Querrichtung des Schiffes auseinandergerückt,
- zwischen den auseinandergerückten Mittelschiffsteile ein zusätzliches Mittelteil eingebaut und hierdurch ein verbreiterter mittlerer Schiffsabschnitt gebildet,
- zwischen dem vorderen Schiffsabschnitt und dem verbreiterten mittleren Schiffsabschnitt eine nach hinten sich verbreiternde zusätzliche Schiffssektion eingebaut und
- der hintere Schiffsabschnitt hinten an den verbreiterten mittleren Schiffsabschnitt durch Verschweißen angebaut wird, wobei der hintere Schiffsabschnitt mit dem mittleren Schiffsabschnitt verschweißt wird.

Bei dem erfindungsgemäßen Verfahren wird durch den Einbau des zusätzlichen Mittelteils in das Schiff die Ladungskapazität sowohl an Deck als auch unter Deck erhöht. Bei einem Containerschiff können folglich wesentlich mehr zusätzliche Containerstellplätze zur Verfügung gestellt werden als bei dem bekannten Verfahren, bei dem lediglich zusätzliche Stellplätze an Deck geschaffen werden. Durch die Schiffsverbreiterung wird die Querstabilität des Schiffsrumpfes erhöht, sodass der notwendige Stabilitätsballast zugunsten der Ladung deutlich verringert wird. Hierdurch werden Brennstoffverbrauch und Schadstoffausstoß reduziert. Das zusätzliche Mittelteil wird in einen Bereich des Schiffes eingesetzt, der verhältnismäßig geringen Belastungen ausgesetzt ist, sodass die Schiffsverbreiterung mit einem vergleichsweise geringen Einsatz von Stahl auskommt. Dies senkt die Umbaukosten und wirkt sich ebenfalls vorteilhaft auf Brennstoffverbrauch und Schadstoffausstoß des verbreiterten Schiffes aus. Zudem werden bei der Schiffsverbreiterung die für die Festigkeit des Schiffsrumpfes maßgeblichen Schiffsseiten mit Außenhaut, Seitenlängsschott und tragendem Lukenlängssüll im mittleren Schiffsabschnitt nicht verändert, was mit hohem Materialeinsatz verbunden wäre und Beeinträchtigungen der Festigkeit zur Folge haben könnte, da diese Bauteile ein komplexes Festigkeitssystem bilden. Durch die zwischen vorderem Schiffsabschnitt und mittlerem Schiffsabschnitt eingebaute zusätzliche Schiffssektion kann weitere Ladungskapazität an Deck und unter Deck geschaffen werden. Dadurch, dass sich die zusätzliche Schiffssektion nach hintern verbreitert, erhält das verbreiterte Schiff eine strömungsgünstige Form, die sich günstig auf den Brennstoffverbrauch und den Schadstoffausstoß auswirkt. Auch der Maschinenraum mit dem Schiffsmotor, das Deckshaus, das Achterschiff, die Propeller- und Ruderanlage (Wellen- und Ruderanlage oder Ruderpropeller) sind vom Umbau nicht betroffen, sofern sie sich im hinteren Schiffsabschnitt befinden. Der Schiffsantrieb kann in der Regel unverändert beibehalten werden, da sich der Umbau nur geringfügig auf den Energiebedarf auswirkt und der Schiffsantrieb meist ohnehin für höhere Fahrleistungen ausgelegt ist. Auch ein neuer Propeller ist in der Regel nicht erforderlich, da das Schiff durch die Vergrößerung langsamer fährt.

Gemäß einer bevorzugten Ausgestaltung wird der vordere Schiffsabschnitt vor dem Laderaum vom mittleren Schiffsabschnitt abgetrennt. Hierdurch kann der Großteil des Laderaums oder der gesamte Laderaum verbreitert werden. Gemäß einer weiteren Ausgestaltung wird der vordere Schiffsabschnitt einschließlich des Kollisionsschottes und vor dem nachfolgenden Querschott vom mittleren Schiffsabschnitt abgetrennt. Das Kollisionsschott schließt nach dem Umbau den verbreiterten und verlängerten Laderaum vorne ab.

Gemäß einer weiteren Ausgestaltung wird der hintere Schiffsabschnitt vor dem Maschinenraum vom mittleren Schiffsabschnitt abgetrennt. Bei dieser Ausgestaltung wird der Maschinenraum durch den Umbau nicht berührt. Gemäß einer weiteren Ausgestaltung wird der hintere Schiffsabschnitt einschließlich des Frontschotts des Maschinenraums hinter dem vorgeordneten Querschott vom mittleren Schiffsabschnitt abgetrennt. Der Maschinenraum ist auch beim Umbau durch das Frontschott geschlossen und nach dem Umbau trennt das Frontschott den Maschinenraum vom vergrößerten Laderaum ab. Gemäß einer bevorzugten Ausgestaltung wird der hintere Schiffsabschnitt einschließlich Deckshaus vom mittleren Schiffsabschnitt abgetrennt. Bei dieser Ausgestaltung wird das Deckshaus durch den Umbau nicht berührt.

Gemäß einer Ausgestaltung wird der mittlere Schiffsabschnitt in einem Abstand von der Längsmittelachse des Schiffes in mindestens zwei Teile getrennt. Auf der Längsmittelachse weisen Schiffe einen verstärkten Kielbereich auf, der vielfach an der Innenseite mit einem zentralen Rohrtunnel versehen ist, durch den Kabel- und Rohrleitungssysteme verlaufen. Ein Eingriff in den Rohrtunnel kann bei dieser Vorgehensweise vermieden werden. Das zusätzliche Mittelteil wird vorzugsweise entsprechend dem ursprünglichen Kielbereich verstärkt, um den neuen Kielbereich zu bilden. Gemäß einer anderen Ausgestaltung wird der mittlere Schiffsabschnitt auf der Längsmittelachse des Schiffes getrennt. Vorzugsweise wird das zusätzliche Mittelteil mit Verstärkungen entsprechend dem ursprünglichen Kielbereich versehen, sodass das umgebaute Schiff einen verbreiterten verstärkten Kielbereich aufweist. Gemäß einer anderen Ausgestaltung wird der mittlere Schiffsabschnitt auf beiden Seiten in einem Abstand von der Längsmittelachse in Längsrichtung in drei Teile getrennt. Das hierbei abgetrennte Mittelteil wird entnommen und durch ein breiteres, zusätzliches Mittelteil ersetzt. Das zusätzliche Mittelteil weist vorzugsweise im Kielbereich Verstärkungen auf. Der Umbau ist zwar aufwendiger, führt jedoch zu Material- und Gewichtseinsparungen, falls der Kielbereich nur dort verstärkt wird, wo dies erforderlich ist.

Gemäß einer weiteren Ausgestaltung ist das zusätzliche Mittelteil mindestens eine vorfabrizierte Sektion, die zwischen die beiden Mittelschiffsteile des mittleren Schiffsabschnitts eingebaut wird. Hierdurch werden die Produktionsabläufe verbessert.

Gemäß einer weiteren Ausgestaltung werden die beiden Mittelschiffsteile weiter auseinandergerückt, als das zusätzliche Mittelteil bereit ist, und werden die beiden Mittelschiffsteile nach dem Einsetzen des zusätzlichen Mittelteils wieder zusammengerückt, sodass sie an das eingesetzte Mittelteil anstoßen und werden die Mittelschiffsteile dann mit dem zusätzlichen Mittelteil verbunden. Dies erleichtert den Einbau des zusätzlichen Mittelteils.

Gemäß einer weiteren Ausgestaltung wird die zusätzliche Schiffssektion vorfabriziert und zwischen den vorderen Schiffsabschnitt und den mittleren Schiffsabschnitt eingebaut. Hierdurch werden die Produktionsabläufe weiter verbessert.

Gemäß einer weiteren Ausgestaltung werden der vordere Schiffsabschnitt und der mittlere Schiffsabschnitt vor dem Einsetzen der zusätzlichen Schiffssektion auf einen die Länge der vorderen Schiffssektion übersteigenden Abstand auseinander gerückt und nach dem Einsetzen der vorderen Schiffssektion zusammengerückt, sodass sie an die vordere Schiffssektion anstoßen, und werden danach mit dieser verbunden. Hierdurch wird der Einbau der zusätzlichen Schiffssektion weiter erleichtert.

Gemäß einer weiteren Ausgestaltung werden die Seiten- und Bodenwände der zusätzlichen Schiffssektion vom mit den Seiten- und Bodenwänden des vorderen Schiffsabschnittes und hinten mit den Seiten- und Bodenwänden des verbreiterten mittleren Schiffsabschnittes verbunden. Hierdurch werden strömungsgünstige Übergänge vom vorderen Schiffsabschnitt zum mittleren Schiffsabschnitt hergestellt.

Gemäß einer weiteren Ausgestaltung werden nach dem Abtrennen des hinteren Schiffsabschnittes der hintere Schiffsabschnitt und der mittlere Schiffsabschnitt auseinandergerückt und nach der Verbreitung des mittleren Schiffsabeschnitts der hintere Schiffsabschnitt und der verbreiterte mittlere Schiffsabschnitt wieder zusammengerückt und dann miteinander verbunden. Hierdurch wird das Auseinanderrücken der Mittelschiffsteile und der Einbau des zusätzlichen Mittelteils erleichtert.

Gemäß einer weiteren Ausgestaltung werden die hinteren Enden der Seitenwände des verbreiterten mittleren Schiffsabschnittes über Verbindungswände mit dem hinteren Schiffsabschnitt verbunden. Die Verbindungswände steigern die Festigkeit des Verbindungsbereiches zwischen verbreitertem mittlerem Schiffsabschnitt und hinterem Schiffsabschnitt. Zusätzlich können die Verbindungswände den verbreiterten mittleren Schiffsabschnitt hinten beidseitig abdichten. Gemäß einer weiteren Ausgestaltung nimmt der Abstand der Verbindungswände voneinander nach hinten ab. Bevorzugt werden die Verbindungswände in einem spitzen Winkel zur Längsachse des Schiffes eingebaut, sodass sie sich nach hinten und auf die Seitenwände des hinteren Schiffsabschnittes zu erstrecken. Hierdurch wird ein allmählicher, strömungsgünstiger Übergang vom mittleren Schiffsabschnitt zum hinteren Schiffsabschnitt geschaffen.

Gemäß einer weiteren Ausgestaltung werden die Hohlräume zwischen den Verbindungswänden und dem Schiffskörper unten durch beidseitige Verbreiterungen des Schiffsbodens geschlossen. Weiterhin vorzugsweise werden die seitlichen Verbindungswände unten zu den beidscitigen Verbreiterungen des Schiffsbodens hin gebogen. Vorzugsweise wird die Biegung der Verbindungswände vorn und hinten an den gebogenen Übergang von den Seitenwänden zum Schiffsboden im Bereich des mittleren Schiffsabschnittes und des hinteren Schiffsabschnittes angepasst. Gemäß einer weiteren Ausgestaltung werden die Hohlräume zwischen den Verbindungswänden und dem Schiffskörper oben durch Verbreiterungen des Hauptdecks geschlossen.

Gemäß einer Ausgestaltung wird das Schiff auf dem Schergang mit Versteifungen versehen. Gemäß einer Ausgestaltung sind die Versteifungen Flacheisen, Gemäß einer weiteren Ausgestaltung werden die Versteifungen auf dem Hauptschergang angebracht. Gemäß einer weiteren Ausgestaltung werden die Versteifungen auf dem mittleren Schiffsabschnitt angebracht. Die Versteifungen kompensieren höhere Belastungen des Schiffes aufgrund der vergrößerten Länge.

Gemäß einer weiteren Ausgestaltung wird die Back des Schiffes verlängert. Die Verlängerung der Back wird gemäß einer bevorzugten Ausgestaltung durch Anschweißen zusätzlicher Bleche hergestellt.

Gemäß einer weiteren Ausgestaltung wird der Bugwulst abgetrennt und durch einen auf die Form des vergrößerten Schiffes optimierten Bugwulst ersetzt. Hierdurch werden Brennstoffverbrauch und Schadstoffausstoß verringert.

Gemäß einer weiteren Ausgestaltung wird die Brückennock verbreitert, sodass ihre Breite der Breite des verbreiterten mittleren Schiffsabschnittes entspricht. Die verbreiterte Brückennock ist vorteilhaft für Anlegemanöver nutzbar.

Gemäß der Erfindung wird ein Containerschiff, ein ConBulker, ein Mehrzweckschiff, ein Lash-Schiff oder ein anderes Schiff mit hohem Decköffnungsgrad vergrößert. Das Verfahren ist vorteilhaft insbesondere bei Schiffen mit hohem Decköffnungsgrad anwendbar, weil sich die vom Umbau betroffenen Strukturen dieser Schiffstypen besonders gut für den Umbau eignen.

Gemäß einer weiteren Ausgestaltung werden bei einem Containerschiff oder einem ConBulker oder einem Mehrzweckschiff der verbreiterte mittlere Schiffsabschnitt und/oder die zusätzliche Schiffssektion mit zusätzlichen Lukensüllen versehen und mit zusätzlichen Lukendeckeln abgedeckt.

Zur Verlagerung der Schiffsabschnitte werden vorzugsweise herkömmliche hydraulische oder pneumatische Schwerlasttransportsysteme mit Gleitschlitten verwendet. Alternativ können die Schiffsabschnitte z.B. im Dock aufgeschwommen, verlagert und dann wieder abgesetzt werden.

Für das Trennen der Schiffsabschnitte voneinander und das Teilen des mittleren Schiffsabschnittes werden vorzugsweise Schneidbrenneranlagen verwendet.

Für die Verbindung der verschiedenen Schiffsstrukturen insbesondere beim Einbau bzw. Anbau des Mittelteils, der zusätzlichen Schiffssektion, des hinteren Schiffsabschnittes, der Verbindungswände und der Verbreiterungen der Schiffsbodens und des Hauptdecks werden vorzugsweise Schweißverfahren verwendet. Nietverbindungen sind ebenfalls möglich.

Das Mittelteil umfasst insbesondere zusätzliche Abschnitte des Doppelbodens, von Querschotten und ggf. einen Längsschott, Bei einem Containerschiff umfasst es zudem zusätzliche Abschnitte von Quersüllen und von Galerien. Der zusätzliche Abschnitt des Doppelbodens, von Querschotten und ggf. Quersüllen und Galerien werden mit den entsprechenden Strukturteilen der auseinandergerückten Mittelschiffsteile verbunden, um diese zu vergrößern. Das Längsschott wird vorzugsweise mit Querschotten verbunden, beispielsweise mit dem Kollisionsschott des Bugs und dem Frontschott des Maschinenraums.

Das zusätzliche Schiffssegment umfasst insbesondere einen zusätzlichen Abschnitt des Doppelbodens und zusätzliche Abschnitte der Seitenwände des Schiffes sowie einen zusätzlichen Abschnitt des Hauptdecks, Hinzu kommen können zusätzliche Querschotte und Abschnitte von Längsschotten. Ferner zusätzliche Luken und Quersülle sowie Galerien.

Ferner wird die Aufgabe durch ein Schiff gemäß Anspruch 12 gelöst. Vorteilhafte Ausgestaltungen des Schiffes sind in den Unteransprüchen angegeben

Das erfindungsgemäße vergrößerte Containerschiff, Conbulker, Mehrzweckschiff, Lash-Schiff oder ein anderes Schiff mit hohem Decksöffnungsgrad hat
- einen zumindest einen Teil des Laderaums umfassenden mittleren Schiffsabschnitt, der durch ein in Längsrichtung des Schiffes erstrecktes, eingebautes Mittelteil verbreitert ist,
- eine sich nach hinten verbreiternde zusätzliche Schiffssektion, die zwischen einem den Bug umfassenden vorderen Schiffsabschnitt und dem verbreiterten mittleren Schiffsabschnitt eingebaut ist, und
- einem das Heck umfassenden hinteren Schiffsabschnitt, der weniger breit als der verbreiterte mittlere Schiffsabschnitt und durch Verschweißen, wobei der hintere Schiffsabschnitt mit dem mittleren Schiffsabschnitt verschweißt ist.

Das Schiff weist die im Zusammenhang mit der Erläuterung des Verfahrens angeführten Vorteile auf.

Gemäß einer weiteren Ausgestaltung umfasst der hintere Schiffsabschnitt den Maschinenraum mit dem Schiffsmotor, das Deckshaus, das Achterschiff und die Ruder- und Propelleranlage.

Gemäß einer weiteren Ausgestaltung umfasst der vordere Schiffsabschnitt das Kollisionsschott und/oder umfasst der hintere Schiffsabschnitt das Frontschott des Maschinenraums und/oder das Deckshaus.

Gemäß einer Ausgestaltung ist das Mittelteil versetzt zur Längsmittelachse des Schiffes eingebaut.

Gemäß einer weiteren Ausgestaltung sind die hinteren Enden der Seitenwände des verbreiterten mittleren Schiffsabschnittes über Verbindungswände mit dem hinteren Schiffsabschnitt verbunden, deren Abstand voneinander nach hinten allmählich abnimmt.

Gemäß einer weiteren Ausgestaltung ist der Schergang mit Versteifungen versehen. Gemäß einer weiteren Ausgestaltung ist der Hauptdeckschergang mit Versteifungen versehen. Gemäß einer weiteren Ausgestaltung befinden sich die Versteifungen im mittleren Schiffsabschnitt. Gemäß einer bevorzugten Ausgestaltung sind die Versteifungen Flacheisen. Vorzugsweise sind die Versteifungen angeschweißt.

Gemäß einer weiteren Ausgestaltung hat das Schiff einen auf die Form des verbreiterten Schiffes optimierter Bugwulst.

Gemäß einer weiteren Ausgestaltung hat das Schiff eine verbreiterte Brückennock, die auf die Breite des verbreiterten mittleren Schiffsabschnittes abgestimmt ist.

Gemäß einer weiteren Ausgestaltung weist die Back Verlängerungen nach hinten auf.

Die Erfindung wird nachfolgend anhand der anliegenden Zeichnungen eines erfindungsgemäßen Schiffes und verschiedener Umbauphasen näher erläutert. In den Zeichnungen zeigen:
- Fig. 1: ein herkömmliches Schiff mit Verbreiterungen durch Sponsons in einem Querschnitt;
- Fig. 2: ein herkömmliches Schiff mit Verbreiterungen und zusätzlichen Containerstandplätzen an Deck in einem Querschnitt;
- Fig. 3: ein erfindungsgemäßes Schiff mit eingebautem Mittelteil im Laderaum in einem Querschnitt;
- Fig. 4: dasselbe Schiff in Seitenansicht;
- Fig. 5: dasselbe Schiff in der Draufsicht;
- Fig. 6: Innenboden desselben Schiffes im Verbindungsbereich von mittlerem und hinterem Schiffsabschnitt in einer vergrößerten Detailansicht;
- Fig. 7: Hauptdeck desselben Schiffes im Verbindungsbereich von mittlerem und hinterem Schiffsabschnitt in vergrößerter Detailansicht;
- Fig. 8: Hauptdeck desselben Schiffes im Verbindungsbereich von vorderem und mittlerem Schiffsabschnitt in vergrößerter Detailansicht;
- Fig. 9: mittlerer Schiffsabschnitt desselben Schiffes in einem Querschnitt;
- Fig. 10: mittlerer Schiffsabschnitt desselben Schiffes nach dem Teilen in Längsrichtung und Auseinanderrücken der beiden Mittelschiffsteile im Querschnitt;
- Fig. 11: verbreiterter mittlerer Schiffsabschnitt nach dem Einbau des Mittelteils in einem Querschnitt.

Bei der nachfolgenden Erläuterung verschiedener Schiffe sind übereinstimmend bezeichnete Bauteile mit denselben Bezugsziffern versehen.

Ferner sind die durch Umbau veränderten Bereiche der Schiffe dunkel getönt.

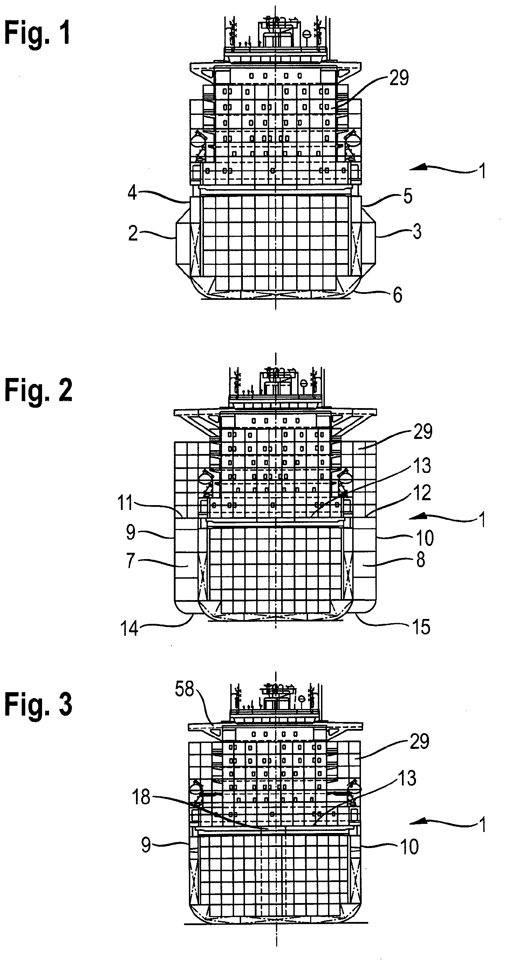

In Fig. 1 bis 3 ist jeweils ein Panmax-Containerschiff mit einer ursprünglichen Ladungskapazität von 4.300 Standardcontainern (Twenty-Foot Equivalent Unit / TEU) gezeigt.

Gemäß Fig. 1 ist das Schiff 1 durch Anbau von Sponsons 2, 3 an die Außenseiten der Seitenwände 4, 5 des Schiffsrumpfes 6 verbreitert. Die Sponsons erstrecken sich oberhalb und unterhalb der Wasserlinie. Durch diese Verbreiterung wird die Querstabilität des Schiffes 1 erhöht und der Bedarf an Ballastwasser verringert. Zusätzliche Ladungskapazität wird hierdurch nicht geschaffen.

Fig. 2 zeigt eine andere Verbreiterung desselben Schiffes 1. Dabei sind außen an die Seitenwände 4, 5 des Schiffsrumpfes 6 Strukturen 7, 8 angebaut, die außen mit zusätzlichen Seitenwänden 9, 10 versehen sind. Oben tragen die Strukturen 7, 8 Verbreiterungen 11, 12 des Hauptdecks 13 und unten sind sie durch zusätzliche Bodenwände 14, 15 geschlossen. Hierdurch werden beidseitig des ursprünglichen Schiffsrumpfes 6 Standflächen für weitere Container an Deck geschaffen. Im Beispiel erfordert die Schiffsverbreiterung den Einsatz von ca. 5.000 Tonnen Stahl. Die Ladungskapazität des Schiffes wird hierdurch um ca. 450 Standardcontainer erhöht.

Fig. 3 zeigt ein erfindungsgemäß verbreitertes Schiff 1. Im mittleren Schiffsabschnitt 16 ist auf der Längsmittelachse 17 des Schiffes 1 ein Mittelteil 18 eingebaut. Hierdurch hat das Schiff zusätzliche Containerstellplätze an und unter Deck. Die Verbreiterung des mittleren Schiffsabschnittes erfordert den Einsatz von ca. 2.000 Tonnen Stahl. Hierdurch wird die Ladungskapazität um ca. 650 Standardcontainer erhöht.

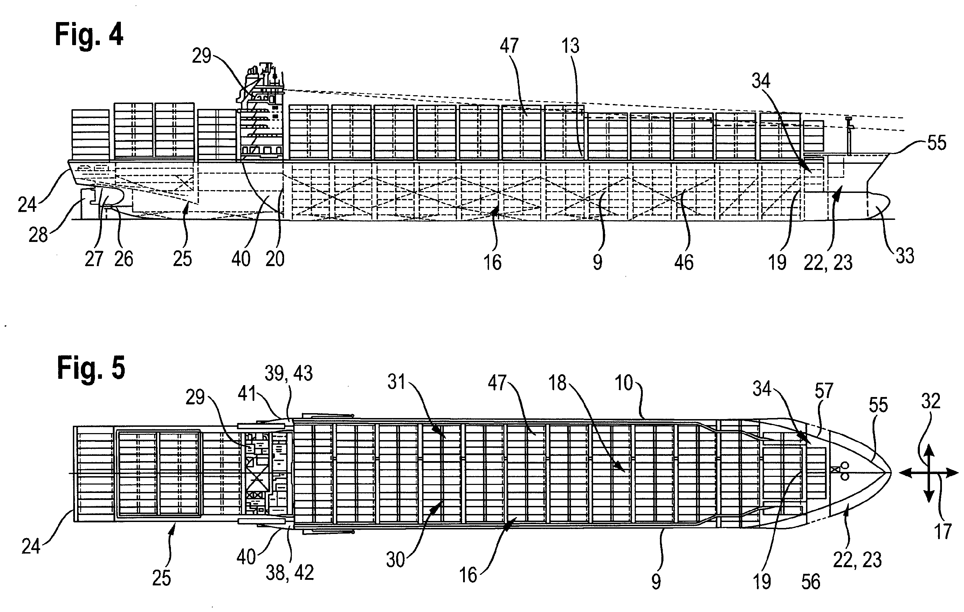

Gemäß Fig. 4 und 5 endet der verbreiterte mittlere Schiffsabschnitt 16 vorn hinter dem Kollisionsschott 18 des Bugs und hinten vor dem Frontschott 20 des Maschinenraums 21, in dem der Schiffsmotor angeordnet ist. Dies beruht darauf, dass bei der Verbreiterung des Schiffes 1 zunächst der Bug 22 einschließlich des Kollisionsschottes 19 als vorderer Schiffsabschnitt 23 und ein vom Heck 24 bis zum Frontschott 20 reichender hinterer Schiffsabschnitt 25 vom mittleren Schiffsabschnitt 16 abgetrennt wurden. Beim Abtrennen des hinteren Schiffsabschnittes 25 wird nicht in Maschinenraum 21, Maschine, Wellenanlage 26, Propeller 27, Ruderanlage 28 und Deckshaus 29 eingegriffen. Anschließend wurde der vordere Schiffsabschnitt 23 in Längsrichtung um etwa 8 m nach vorne gerückt und der hintere Schiffsabschnitt 25 in Längsrichtung um einen kleinen Abstand von z.B. 0,50 m nach hinten gerückt.

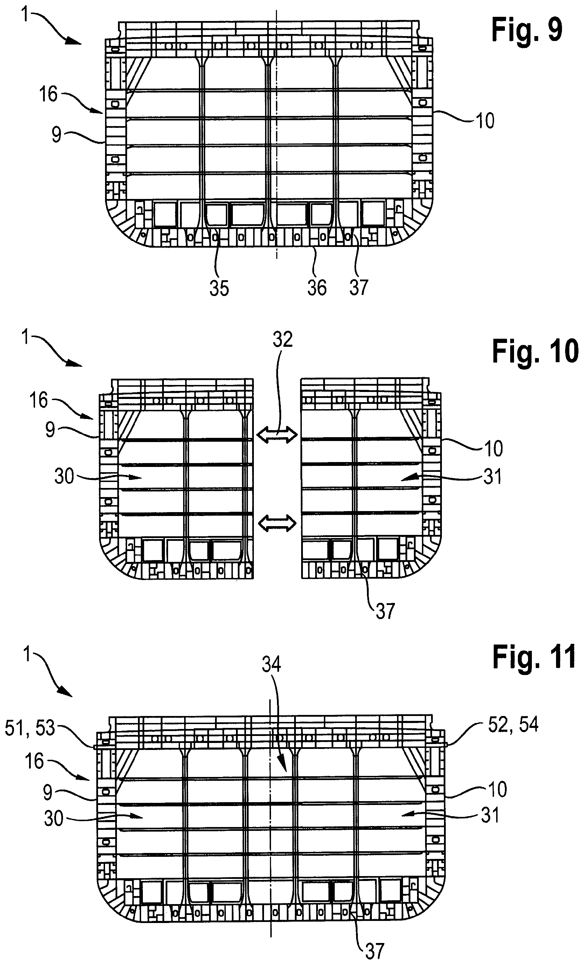

Danach wurde der mittlere Schiffsabschnitt 16 in Längsrichtung in zwei Mittelschiffsteile 30, 31 geteilt und die beiden Mittelschiffsteile 30, 31 in Querrichtung 32 des Schiffs 1 auseinandergerückt. Das Teilen des mittleren Schiffsabschnittes 16 und Auseinanderrücken der Mittelschiffsteile 30, 31 ist in den Fig. 9 bis 11 gezeigt. Danach wurde das Mittelteil 18 in einer oder mehreren Sektionen zwischen die Mittelschiffsteile 30, 31 gesetzt und diese bis zur Anlage an das Mittelteil 18 zusammengerückt. Danach wurden die Mittelschiffsteile 30, 31 mit dem Mittelteil 18 verschweißt.

Ferner wurde gemäß Fig. 4 der Bugwulst durch einen an die neue Bugform angepassten neuen Bugwulst 33 ersetzt.

Des Weiteren wurde eine sich nach hinten verbreiternde zusätzliche Schiffssektion 34 zwischen den mittleren Schiffsabschnitt 16 und den vorderen Schiffsabschnitt 23 eingesetzt. Mittlerer Schiffsabschnitt 16, zusätzliche Schiffssektion 34 und vorderer Schiffsabschnitt 23 wurden zusammengerückt und miteinander verschweißt. Durch die zusätzliche Schiffssektion 34 wird die Lücke zwischen vorderem Schiffsabschnitt 23 und mittlerem Schiffsabschnitt 16 geschlossen und ein glatter, strömungsgünstiger Übergang zwischen diesen Abschnitten hergestellt.

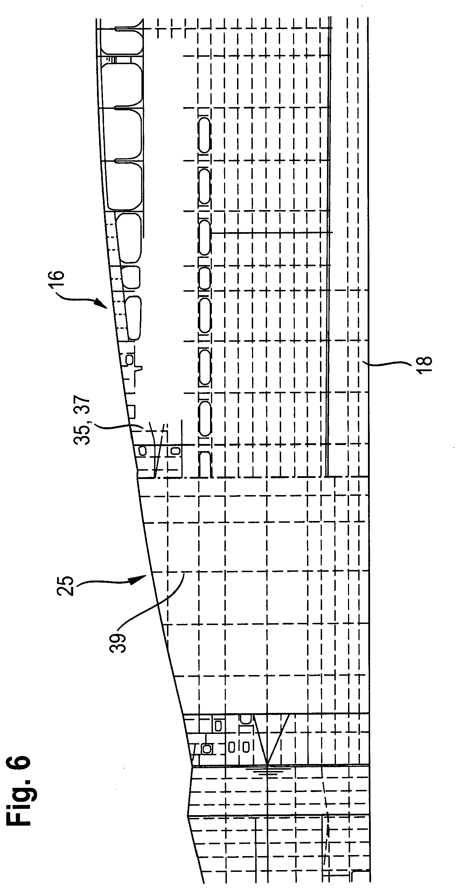

Ferner wurde der hintere Schiffsabschnitt 25 an den verbreiterten mittleren Schiffsabschnitt 16 herangerückt. Gemäß Fig. 6 wurden der Schiffsinnenboden 35 und dementsprechend der Schiffsaußenboden 36 des Schiffsbodens 37 am vorderen Ende des hinteren Schiffsabschnittes 25 mit Verbreiterungen 38 versehen, die sich nach vorn allmählich erweitern. Die Verbreiterungen 38, 39 des Schiffsbodens 37 schließen vorne glatt an die äußeren Ränder des Schiffsbodens 37 des verbreiterten mittleren Schiffsabschnittes 16 an und laufen hinten in einem Abschnitt des Schiffsbodens 37 des hinteren Schiffsabschnittes 25 mit der ursprünglichen Breite aus.

Ferner wurde der hintere Schiffsabschnitt 25 mit dem vorbereiteten mittleren Schiffsabschnitt 16 verschweißt. An die hinteren Enden der Seitenwände 9, 10 des verbreiterten mittleren Schiffsabschnittes 16 wurden gemäß Fig. 4 und 5 Verbindungswände 40, 41 angesetzt, deren Abstand voneinander nach hinten abnimmt und die an den hinteren Enden mit den Seitenwänden 9, 10 des hinteren Schiffsabschnittes 25 verschweißt sind.

Die Verbreiterungen 38, 39 des Schiffsbodens 37 schließen den Hohlraum zwischen den Verbindungswänden 40, 41 und dem Schiffsrumpf an der Unterseite ab.

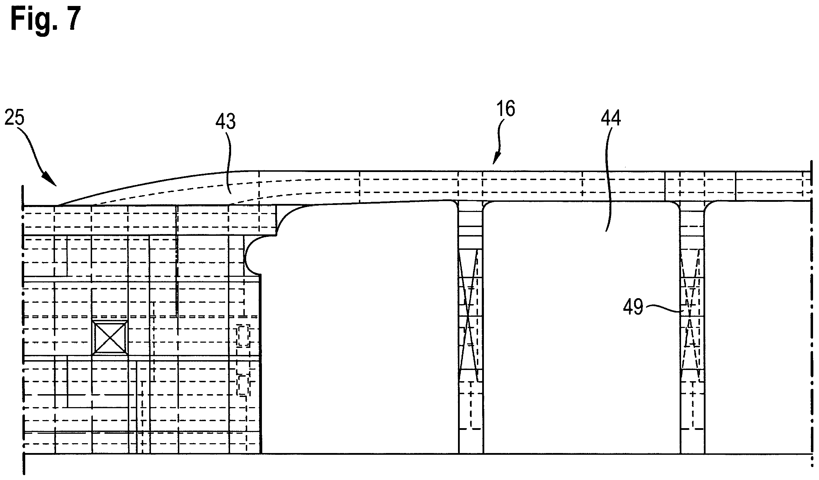

Gemäß Fig. 7 wurden am vorderen Ende des hinteren Schiffsabschnittes 25 beidseitig Verbreiterungen 42, 43 des Hauptdecks 13 angebaut, die vorne mit den äußeren Randbereichen des Hauptdecks des mittleren Schiffsabschnittes 16 verbunden sind und deren Breite nach hinten abnimmt, bis sie in dem ursprünglichen Hauptdeck 13 des hinteren Schiffsabschnittes 25 auslaufen. Die Verbreiterungen 42, 43 des Hauptdecks 16 schließen den Hohlraum zwischen den Verbindungswänden 40, 41 und dem Schiffskörper oben ab.

Durch die Verbindungswände 40, 41 und die Verbreiterungen 38, 39 des Schiffsbodens 37 und des Hauptdecks 13 wird der Verbindungsbereich zwischen dem mittleren Schiffsabschnitt 16 und dem hinteren Schiffsabschnitt 25 verfestigt. Zudem werden die vom hinteren Schiffsabschnitt 25 überstehenden Randbereiche des mittleren Schiffsabschnittes 16 geschlossen und ein gleichmäßiger, strömungsgünstiger Übergang zwischen dem mittleren Schiffsabschnitt 16 und dem hinteren Schiffsabschnitt 25 hergestellt.

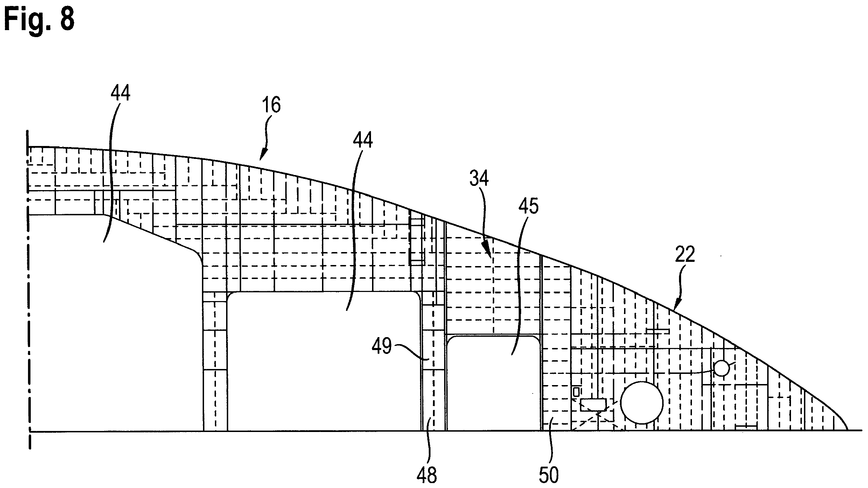

Im Bereich des Mittelteils 18 und der zusätzlichen Schiffssektion 34 werden die Luken 44 vergrößert bzw. zusätzliche Luken 45 geschaffen und im Laderaum 46 und an Deck 13 weitere Stellplätze für Container 47 zur Verfügung gestellt. Dort sind Verlängergungen 48 der Lukensülle 49 bzw. zusätzliche Lukensülle 50 eingebaut, die zusätzliche Lukendeckel tragen. Dies ist insbesondere in Fig. 8 gezeigt.

Gemäß Fig. 11 ist der Hauptschergang 51, 52 des Schiffes 1 auf beiden Seiten mit Versteifungen 53, 54 versehen.

Aus Fig. 5 ist ersichtlich, dass die Back 55 des Schiffes auf beiden Seiten nach hinten Verlängerungen 56, 57 aufweist.

Fig. 3 zeigt, dass die Brückennock 58 beidseitig verbreitert ist, so dass ihre Breite der Breite des verbreiterten mittleren Schiffsabschnitts 16 entspricht.

Die unterschiedliche Wirtschaftlichkeit der Schiffe von Fig. 1 bis 3 wird insbesondere bei Vergleich des Energy Efficiency Transport Index (EETI) deutlich. Dieser setzt den Verbrauch an Brennstoff ins Verhältnis zur Ladung bestehend aus mit jeweils 14 Tonnen beladenen Containern und Betriebsdauer. Der Vergleichswert in Kilogramm Marinedieselöl (MDO)/TEU 14 x Tag beträgt bei dem Schiff der ersten Figur 30,4, bei dem Schiff der zweiten Figur 29,9 und bei dem erfindungsgemäßen Schiff 26,2. Der Vergleichswert des erfindungsgemäßen Schiffes ist ähnlich den Vergleichswerten von Schiffsneubauten mit von vornherein verbreitertem Schiffsrumpf.

### Bezugszeichenliste

- 1: Schiff
- 2,3: Sponson
- 4,5: Seitenwände
- 6: Schiffsrumpf
- 7, 8: Strukturen
- 9, 10: Seitenwände
- 11, 12, 38, 39, 42, 43: Verbreiterungen
- 13: Deck
- 14, 15: Bodenwände
- 16: mittlerer Schiffsabschnitt
- 17: Längsmittelachse
- 18: Mittelteile
- 19: Kollisionsschott
- 20: Frontschott
- 21: Maschinenraum
- 22: Bug
- 23: vorderer Schiffsabschnitt
- 24: Heck
- 25: hinterer Schiffsabschnitt
- 26: Wellenanlage
- 27: Propeller
- 28: Ruderanlage
- 29: Deckshaus
- 30, 31: Mittelschiffsteile
- 32: Bugwulst
- 34: zusätzliche Schiffssektion
- 35: Schiffsinnenboden
- 36: Schiffsaußenboden
- 37: Schiffsboden
- 40, 41: Verbindungswände
- 44, 45: Luken
- 46: Laderaum
- 47: Stellplätze
- 48, 56, 57: Verlängerungen
- 49, 50: Lukensülle
- 51, 52: Schergang
- 53, 54: Versteifungen
- 55: Back
- 58: Brückennock

## Patentansprüche

1. Verfahren zur Schiffsvergrößerung, bei dem
• ein Containerschiff (1), Conbulker, Mehrzweckschiff, Lash-Schiff oder ein anderes Schiff mit hohem Decksöffnungsgrad verbreitert wird, wobei
• ein den Bug (22) umfassender vorderer Schiffsabschnitt (23) und ein das Heck (24) umfassender hinterer Schiffsabschnitt (25) von einem zumindest einen Teil des Laderaums (46) umfassenden mittleren Schiffsabschnitt (16) abgetrennt werden,
• der vordere Schiffsabschnitt (23) und der mittlere Schiffsabschnitt (16) in Längsrichtung (17) auseinandergerückt werden,
• der mittlere Schiffsabschnitt (16) in Längsrichtung (17) in mindestens zwei Mittelschiffsteile (30, 31) geteilt wird,
• die Mittelschiffsteile (30, 31) in Querrichtung (32) des Schiffes (1) auseinandergerückt werden,
• zwischen den auseinandergerückten Mittelschiffsteile (30, 31) ein zusätzliches Mittelteil (18) eingebaut und hierdurch ein verbreiterter mittlerer Schiffsabschnitt (16) gebildet wird,
• zwischen dem vorderen Schiffsabschnitt (23) und dem verbreiterten mittleren Schiffsabschnitt (16) eine nach hinten sich verbreiternde zusätzliche Schiffssektion (34) eingebaut wird,
• der hintere Schiffsabschnitt (25) hinten an den verbreiterten mittleren Schiffsabschnitt (16) durch Verschweißen angebaut wird, wobei der hintere Schiffsabschnitt (25) mit dem mittleren Schiffsabschnitt (16) verschweißt wird.

2. Verfahren nach Anspruch 1, bei dem der vordere Schiffsabschnitt (23) einschließlich des Kollisionsschotts (19) vor dem nachfolgenden Querschott vom mittleren Schiffsabschnitt (16) abgetrennt wird.

3. Verfahren nach Anspruch 1 oder 2, bei dem der hintere Schiffsabschnitt (25) einschließlich des Frontschotts (20) des Maschinenraums (21) hinter dem vorgeordneten Querschott von dem mittleren Schiffsabschnitt (16) abgetrennt wird.

4. Verfahren nach einem der Ansprüche 1 bis 3, bei dem der mittlere Schiffsabschnitt (16) in einem Abstand von Längsmittelachse (17) des Schiffes (1) in mindestens zwei Mittelschiffsteile (30, 31) geteilt wird.

5. Verfahren nach einem der Ansprüche 1 bis 3, bei dem das zusätzliche Mittelteil (18) mindestens eine vorfabrizierte Sektion ist, die zwischen die beiden Mittelschiffsteile (30, 31) des mittleren Schiffsabschnittes (16) eingebaut wird.

6. Verfahren nach einem der Ansprüche 1 bis 5, bei dem die zusätzliche Schiffssektion (34) vorfabriziert und zwischen dem vorderen Schiffsabschnitt (23) und dem mittleren Schiffsabschnitt (16) eingebaut wird.

7. Verfahren nach einem der Ansprüche 1 bis 6, bei dem die hinteren Enden der Seitenwände (9, 10) des verbreiterten mittleren Schiffsabschnittes (16) über Verbindungswände (40, 41) mit dem hinteren Schiffsabschnitt (25) verbunden werden, deren Abstand voneinander nach hinten abnimmt.

8. Verfahren nach Anspruch 7, bei dem Hohlräume zwischen den Verbindungswänden (40, 41) und dem Schiffskörper unten durch beidseitige Verbreiterungen (38, 39) des Schiffsbodens (37) geschlossen werden und/oder bei dem Hohlräume zwischen den Verbindungswänden (40, 41) und dem Schiffskörper oben durch Verbreiterungen (42, 43) des Hauptdecks (13) geschlossen werden.

9. Verfahren nach einem der Ansprüche 1 bis 8, bei dem der Schergang (51, 52) mit Versteifungen (53, 54) versehen wird.

10. Verfahren nach einem der Ansprüche 1 bis 9, bei dem die Back (55) nach hinten mit Verlängerungen (56, 57) versehen wird und/oder bei dem Bugwulst abgetrennt und durch einen auf die Form des verbreiterten Schiffes optimierten Bugwulst (33) ersetzt wird und/oder bei dem die Brückennock (58)verbreitert wird, so dass ihre Breite der Breite des verbreiterten mittleren Schiffsabschnittes (16) entspricht.

11. Vergrößertes Containerschiff (1), Conbulker, Mehrzweckschiff, Lash-Schiff oder ein anderes Schiff mit hohem Decksöffnungsgrad mit
• einem zumindest einen Teil des Laderaums (46) umfassenden mittleren Schiffsabschnitt (16), der durch ein in Längsrichtung (17) des Schiffes (1) erstrecktes, eingebautes Mittelteil (18) verbreitert ist,
• einer sich nach hinten verbreiternden zusätzlichen Schiffssektion (34), die zwischen einem den Bug (22) umfassenden vorderen Schiffsabschnitt (23) und dem verbreiterten mittleren Schiffsabschnitt (16) eingebaut ist, und
• einem das Heck (24) umfassenden hinteren Schiffsabschnitt (25), der weniger breit als der verbreiterte mittlere Schiffsabschnitt (16) und an diesen durch Verschweißen angebaut ist, wobei der hintere Schiffsabschnitt (25) mit dem mittleren Schiffsabschnitt (16) verschweißt ist.

12. Schiff nach Anspruch 11, bei dem der Mittelteil (18) versetzt zur Längsmittelachse (17) des Schiffes eingebaut ist.

13. Schiff nach Anspruch 11 oder 12, bei dem die hinteren Enden der Seitenwände (9, 10) des verbreiterten mittleren Schiffsabschnittes (16) über Verbindungswände (40, 41) mit dem hinteren Schiffsabschnitt (25) verbunden sind, deren Abstand voneinander nach hinten abnimmt.

14. Schiff nach Anspruch 13, bei dem Hohlräume zwischen den Verbindungswänden (40, 41) und dem Schiffskörper unten durch beidseitige Verbreiterungen (38, 39) des Schiffbodens (37) geschlossen sind und/oder bei dem Hohlräume zwischen den Verbindungswänden (40, 41) und dem Schiffskörper oben durch Verbreiterungen (42, 43) des Hauptdecks (13) geschlossen sind.

15. Schiff nach einem der Ansprüche 11 bis 14, bei dem der Schergang (51, 52) Versteifungen (53, 54) aufweist.

16. Schiff nach einem der Ansprüche 11 bis 15, das einen auf den verbreiterten Mittelabschnitt (16) des Schiffes (1), die zusätzliche Schiffssektion (34) und den Übergangsbereich zwischen verbreiterten mittleren Schiffsabschnitt (16) und schlankem hinterem Schiffsabschnitt (25) abgestimmten Bugwulst (33) aufweist und/oder bei dem die Breite der Brückennock (58) auf die Breite des verbreiterten mittleren Schiffsabschnittes (16) abgestimmt ist und/oder bei dem die Back (55) nach hinten Verlängerungen (56, 57) aufweist.

## Claims

1. A method to enlarge a ship, wherein:
• a container ship (1), conbulker, multipurpose ship, lash ship or another ship with a large open deck is widened, wherein
• a front ship section (23) comprising the bow (22) and a rear ship section (25) comprising the stern (24) are separated from a middle ship section (16) comprising at least part of the cargo space (46),
• the front ship section (23) and the middle ship section (16) are moved apart in the longitudinal direction (17),
• the middle ship section (16) is divided in the longitudinal direction (17) into at least two middle ship parts (30, 31),
• The middle ship parts (30, 31) are moved apart in the transverse direction (32) out of the ship (1),
• an additional middle part (18) is installed between the moved-apart middle ship parts (30, 31) to form a wider middle ship section (16),
• an additional ship section (34) which widens toward the rear and is installed between a front ship section (23) and the widened middle ship section (16),
• the rear ship section (25) is mounted directly on the rear of the widened middle ship section (16) by welding, wherein the rear ship section (25) is welded with the middle ship section (16).

2. The method according to claim 1, wherein the front ship section (23), including the collision bulkhead (19) in front of the subsequent transverse bulkhead, is separated from the middle ship section (16).

3. The method according to claim 1 or 2, wherein the rear ship section (25), including the front bulkhead (20) of the engine room (21) behind the preceding transverse bulkhead, is separated from the middle ship section (16).

4. The method according to one of the claims 1 to 3, wherein the middle ship section (16) is divided into at least two middle ship parts (30, 31) at a distance from the longitudinal middle axis (17) of the ship (1)

5. The method according to one of the claims 1 to 3, wherein the additional middle part (18) comprises at least one prefabricated section which is installed between the two middle ship parts (30, 31) of the middle ship section (16).

6. The method according to one of the claims 1 to 5, wherein the additional ship section (34) is prefabricated and installed between the front ship section (23) and the middle ship section (16).

7. The method according to one of claims 1 to 6, wherein the rear ends of the side walls (9, 10) of the widened middle ship section (16) are connected to the rear ship section (25) by means of connecting walls (40, 41) whose distance from each other gradually decreases toward the rear.

8. The method according to claim 7, wherein the chambers between the connecting walls (40, 41) and the ship's body are closed at the bottom by widenings (38, 39) of the ship floor (37) on both sides, and/or the chambers between the connecting walls (40, 41) and the ship's body are closed at the top by widenings (42, 43) of the main deck (13).

9. The method according to one of claims 1 to 8, wherein the sheer strake (51, 52) is provided with reinforcements (53, 54).

10. The method according to one of claims 1 to 9, wherein the forecastle (55) is provided with extensions (56, 57) on both sides to the rear, and/or the bulbous bow is removed and replaced with a bulbous bow (33) optimized to the shape of the enlarged ship, and/or wherein the bridge wing (58) is widened so that its width corresponds to the width of the widened middle ship section (16).

11. An enlarged container ship (1), conbulker, multipurpose ship, lash ship or another ship with a large open deck, with
• a middle ship section (16), comprising at least part of the cargo space (46), which is widened by an installed middle part (18) extending in the longitudinal direction (17) of the ship (1),
• an additional ship section (34) which widens toward the rear and is installed between a front ship section (23) comprising the bow (22), and the widened middle ship section (16), and
• a rear ship section (25) which comprises the stern (24), is less wide than the widened middle section ship section (16) and is mounted directly thereon by welding, wherein the rear ship section (25) is welded with the middle ship section (26).

12. The ship according to claim 11, wherein the middle part (18) is installed offset relative to the longitudinal middle axis (17) of the ship.

13. The ship according to claim 11 or 12, wherein the rear ends of the side walls (9, 10) of the widened middle ship section (16) are connected to the rear ship section (25) by means of connecting walls (40, 41) whose distance from each other gradually decreases toward the rear.

14. The ship according to claim 13, wherein the chambers between the connecting walls (40, 41) and the ship's body are closed at the bottom by widenings (38, 39) of the ship floor (37) on both sides, and/or the chambers between the connecting walls (40, 41) and the ship's body are closed at the top by widenings (42, 43) of the main deck (13).

15. The ship according to one of claims 11 to 14, wherein the sheer strake (51, 52) has reinforcements (53, 54).

16. The ship according to one of claims 11 to 15 which has an enlarged bow (33) adapted to the widened middle section (16) of the ship (1), the additional ship section (34) and the transitional area between the widened middle ship section (16) and the slender rear ship section (25), and/or wherein the width of the bridge wing (58) is adjusted to the width of the widened middle ship section (16), and/or wherein the forecastle (55) has extensions (56, 57) to the rear.

## Revendications

1. Procédé d'agrandissement de bateau, dans lequel
• un porte-conteneurs (1), porte-conteneurs vraquier, navire polyvalent, navire LASH ou un autre bateau à haut coefficient d'ouverture de pont est élargi, dans lequel
• une section de bateau avant (23) comprenant la proue (22) et une section de bateau arrière (25) comprenant la poupe (24) sont séparées par une section de bateau centrale (16) comprenant au moins une partie de la cale à marchandises (46),
• la section de bateau avant (23) et la section de bateau centrale (16) sont écartées l'une de l'autre dans la direction longitudinale (17),
• la section de bateau centrale (16) est divisée dans la direction longitudinale (17) en au moins deux parties de corps milieu (30, 31),
• les parties de corps milieu (30, 31) sont écartées l'une de l'autre dans la direction transversale (32) du bateau (1),
• une partie centrale (18) supplémentaire est insérée entre les parties de corps milieu (30, 31) écartées l'une de l'autre et une section de bateau centrale (16) élargie est ainsi formée,
• un tronçon de bateau (34) supplémentaire s'élargissant vers l'arrière est inséré entre la section de bateau avant (23) et la section de bateau centrale (16) élargie,
• la section de bateau arrière (25) est montée derrière par soudage sur la section de bateau centrale (16) élargie, la section de bateau arrière (25) étant soudée à la section de bateau centrale (16).

2. Procédé selon la revendication 1, dans lequel la section de bateau avant (23) y compris la cloison d'abordage (19) est séparée de la section de bateau centrale (16) avant la cloison transversale suivante.

3. Procédé selon la revendication 1 ou 2, dans lequel la section de bateau arrière (25) y compris la cloison frontale (20) de la salle des machines (21) est séparée de la section de bateau centrale (16) derrière la cloison transversale précédente.

4. Procédé selon l'une des revendications 1 à 3, dans lequel la section de bateau centrale (16) est divisée en au moins deux parties de corps milieu (30, 31) à une distance de l'axe médian longitudinal (17) du bateau (1).

5. Procédé selon l'une des revendications 1 à 3, dans lequel la partie centrale (18) supplémentaire est au moins un tronçon préfabriqué, qui est inséré entre les deux parties de corps milieu (30, 31) de la section de bateau centrale (16).

6. Procédé selon l'une des revendications 1 à 5, dans lequel le tronçon de bateau (34) supplémentaire est préfabriqué et inséré entre la section de bateau avant (23) et la section de bateau centrale (16).

7. Procédé selon l'une des revendications 1 à 6, dans lequel les extrémités arrière des parois latérales (9, 10) de la section de bateau centrale (16) élargie sont reliées à la section de bateau arrière (25) par le biais de parois de liaison (40, 41), dont l'écartement mutuel diminue vers l'arrière.

8. Procédé selon la revendication 7, dans lequel des espaces creux entre les parois de liaison (40, 41) et le corps de bateau sont fermés en bas par des élargissements bilatéraux (38, 39) du fond de cale (37) et/ou dans lequel des espaces creux entre les parois de liaison (40, 41) et le corps de bateau sont fermés en haut par des élargissements (42, 43) du pont principal (13).

9. Procédé selon l'une des revendications 1 à 8, dans lequel la virure de carreau (51, 52) est pourvue de renforts (53, 54).

10. Procédé selon l'une des revendications 1 à 9, dans lequel le gaillard (55) est pourvu de prolongements (56, 57) vers l'arrière et/ou dans lequel le bulbe d'étrave est détaché et remplacé par un bulbe d'étrave (33) optimisé pour la forme du bateau élargi et/ou dans lequel l'aile de passerelle (58) est élargie, de sorte que sa largeur correspond à la largeur de la section de bateau centrale (16) élargie.

11. Porte-conteneurs (1), porte-conteneurs vraquier, navire polyvalent, navire LASH ou un autre bateau à haut coefficient d'ouverture de pont, agrandi, comprenant
• une section de bateau centrale (16) comprenant au moins une partie de la cale à marchandises (46), et qui est élargie par une partie centrale (18) insérée étendue dans la direction longitudinale (17) du bateau (1),
• un tronçon de bateau (34) supplémentaire s'élargissant vers l'arrière, qui est inséré entre une section de bateau avant (23) comprenant la proue (22) et la section de bateau centrale (16) élargie, et
• une section de bateau arrière (25) comprenant la poupe (24), qui est moins large que la section de bateau centrale (16) élargie et est montée sur celle-ci par soudage, la section de bateau arrière (25) étant soudée à la section de bateau centrale (16).

12. Bateau selon la revendication 11, dans lequel la partie centrale (18) est insérée décalée par rapport à l'axe médian longitudinal (17) du bateau.

13. Bateau selon la revendication 11 ou 12, dans lequel les extrémités arrière des parois latérales (9, 10) de la section de bateau centrale (16) élargie sont reliées à la section de bateau arrière (25) par le biais de parois de liaison (40, 41), dont l'écartement mutuel diminue vers l'arrière.

14. Bateau selon la revendication 13, dans lequel des espaces creux entre les parois de liaison (40, 41) et le corps de bateau sont fermés en bas par des élargissements bilatéraux (38, 39) du fond de cale (37) et/ou dans lequel des espaces creux entre les parois de liaison (40, 41) et le corps de bateau sont fermés en haut par des élargissements (42, 43) du pont principal (13).

15. Bateau selon l'une des revendications 11 à 14, dans lequel la virure de carreau (51, 52) comporte des renforts (53, 54).

16. Bateau selon l'une des revendications 11 à 15, qui comporte un bulbe d'étrave (33) adapté à la section centrale (16) élargie du bateau (1), au tronçon de bateau (34) supplémentaire et à la zone de transition entre la section de bateau centrale (16) élargie et la section de bateau arrière (25) étroite et/ou dans lequel la largeur de l'aile de passerelle (58) est adaptée à la largeur de la section de bateau centrale (16) élargie et/ou dans lequel le gaillard (55) comporte des prolongements (56, 57) vers l'arrière.
